# EUROPEAN PATENT SPECIFICATION

(11) **EP 3 416 530 B1**
(45) Date of publication and mention of the grant of the patent: **08.04.2020**
(21) Application number: 17716060.3
(22) Date of filing: 06.02.2017
(51) Int. Cl.: A47J 31/41

(54) **DELIVERING DEVICE OF A LIQUID SUBSTANCE FOR PREPARING BEVERAGES**
VORRICHTUNG ZUR ABGABE EINER FLÜSSIGEN SUBSTANZ ZUR ZUBEREITUNG VON GETRÄNKEN
DISPOSITIF DE DISTRIBUTION D'UNE SUBSTANCE LIQUIDE POUR PRÉPARER DES BOISSONS

(30) Priority: 19.02.2016 IT UB20160854
(43) Date of publication of application: 26.12.2018
(73) Proprietor: Sandenvendo Europe S.p.A., 15030 Coniolo (AL) (IT)
(72) Inventor: SPAGNA, Danilo, 15030 Coniolo (AL) (IT)
(74) Representative: Garavelli, Paolo
(86) International application number: PCT/IT2017/000021
(87) International publication number: WO 2017/141280

(56) References cited:
- WO-A1-03/041546
- US-A- 5 312 020
- US-A- 5 927 553

## Description

The present invention refers to a delivering device of a liquid substance for preparing beverages.

In particular, the present invention deals with systems for preparing beverages in which such device is necessary to deliver liquids and to allow mixing such liquids.

Multi-beer apparatuses are known, comprising a plurality of delivering assemblies which are configured to be selectively actuated in a coupled mode, wherein such plurality of delivering assemblies cooperate for quickly producing a higher amount of delivered beverage in a single seat, or in an independent mode in which the plurality of delivering assembles operate independently for producing a fermented beverage delivered in different positions.

The state of the art is given by patents about apparatuses for preparing beverages dealing with mixers for liquids outside a nozzle and cleaning apparatuses for beverage delivering devices.

For example, patent EP2355667B1 refers to an integrated system for delivering beverages comprising a delivering module of one or more ingredients in different containers and a mixer which allows mixing the ingredients in such containers. The delivering module comprises a single delivering nozzle for the plurality of containers. The mixer is connected to a linear slider actuated by a stepped motor through a controller which provides a specific mixing profile for a given beverage.

Patent EP2355667B1, however, does not solve the problem of delivering beverages composed of volatile substances. This problem is instead mentioned in patent US7389943B2 dealing with an apparatus for delivering a volatile substance and comprising: an electro-mechanical distributor to deliver a volatile substance; a cartridge for keeping a plurality of containing tanks for volatile substances to be delivered; and a rotating arm for alternately disengage a tank from the delivering device and engage a following tank.

Patent US7389943B2 refers in general to systems for treating air through the use of volatile substance. For this purpose, patent US7389943B2 can be used as starting point to define the present invention.

Another problem present in systems for preparing beverages is given by the lack of a constructive simplification, though keeping high quality requirement in preparing the beverages. This problem is instead mentioned in patent US4391390A, dealing with devices for mixing and batching chemical substances, completely operated without the use of timed valves or electrically actuated valves, exclusively operating due to pressure differences, obtaining a controlled mixing without the costs and uncertainty of electrically controllable solenoid valves or other timed batching devices.

Documents US-A-5 312 820, US-A-5 927 553 and WO-A1-03/041546 disclose delivering devices according to the preamble of Claim 1.

Object of the present invention is solving the above prior art problems, by providing a delivering device which is able to suck vapours to allow mixing such liquids, by increasing the quality of a beverage through a mixing process which is free from volatile substances.

A further object of the present invention is providing a delivering device which allows simplifying the construction and the operating logics of a system for preparing beverages by doing without solenoid valves and timed devices.

The above and other objects and advantages of the invention, as will appear from the following description, are obtained with a device for delivering a liquid substance for preparing beverages as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:
- Figures 1 and 2 respectively show a perspective view and a top view of a preferred embodiment of the delivering device of a liquid substance for preparing beverages according to the present invention;

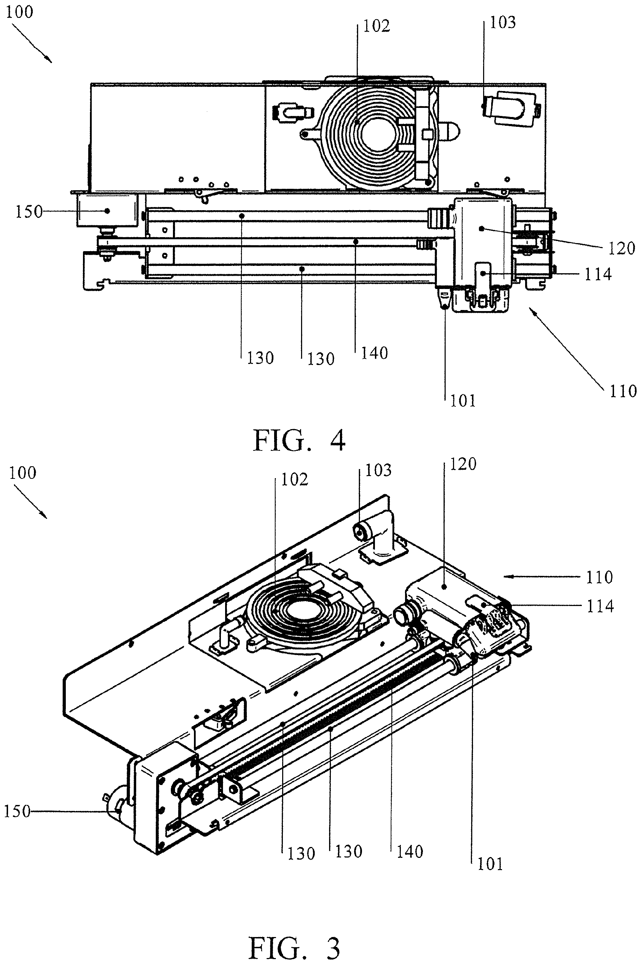

- Figures 3 and 4 respectively show a perspective view and a top view of some components of the delivering device according to the present invention; and
- Figures 5 and 6 respectively show a perspective view and a top view of the components of Figures 3 and 4 partially disassembled.

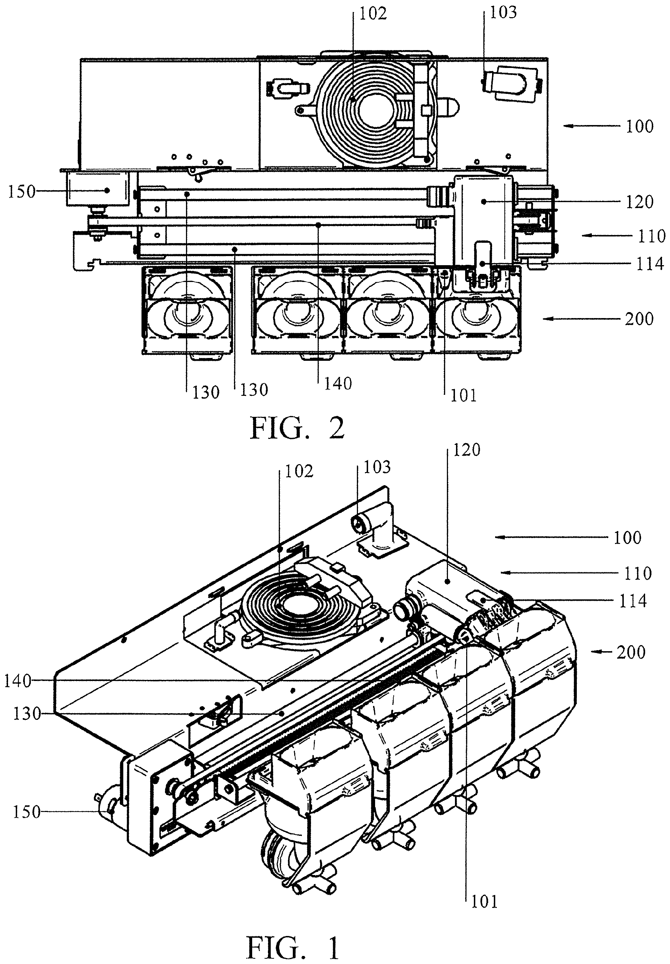

Therefore, with reference to Figures 1 and 2, it is possible to note that a delivering device 100 of a liquid substance for preparing beverages according to the present invention comprises at least one nozzle 101 adapted to be placed, in a sequence, next to at least one container of a battery 200 of containers to allow outwards pouring a dose of the liquid substance, in a pre-established amount and mixed with other ingredients of the beverages.

Advantageously, such delivering device 100 of a liquid substance for preparing beverages comprises at least one extracting device 110 of vapours of the liquid substance released in a space between the battery 200 of containers and the nozzle 101.

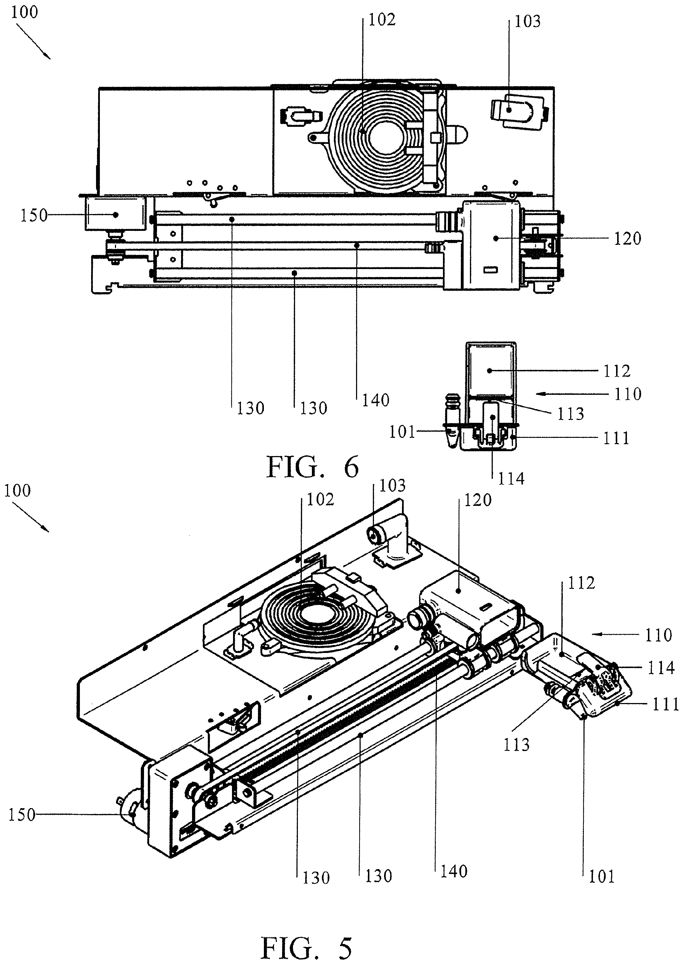

With reference to Figures 5 and 6, it is possible to note that the extracting device 110 comprises capturing means 111 and collecting means 112 of vapours of the liquid substance released in a space between the battery 200 of containers and the nozzle 101.

In particular, the delivering device 100 of a liquid substance for preparing beverages comprises at least one trolley 120 sliding along guiding means 130 and dragged with transmission means 140 by at least one controlled motor 150.

The trolley 120 allows transporting the nozzle 101 and the extracting device 110 of vapours of the liquid substance.

The extracting device 110 is separable from the trolley 120 to allow cleaning the collecting means 112.

The nozzle 101 is connected through at least one hydraulic flexible tube (not shown) to thermal-hydraulic means 102 comprising at least one boiler for heating the liquid substance to be sent to the nozzle 101.

According to a variation of the delivering device 100, the thermal-hydraulic means 102 are fixed with respect to the trolley 120 and lacking solenoid valves or timed or intercepting elements of the liquid substance.

The extracting device 110 is connected through a hydraulic flexible tube (not shown) to sucking means 103 comprising at least one fan.

According to a further variation of the delivering device 100, the sucking means 103 are fixed with respect to the trolley 120 and lacking solenoid valves or timed or intercepting elements of the liquid substance.

The capturing means 111 comprise at least one hood opened at the base to allow flowing the vapours of the liquid substance towards the collecting means 112. Moreover, the collecting means 112 comprise at least one tank.

The capturing means 111 and the collecting means 112 are separated by at least one wall 113 open on its top and equipped with closing means 114 adapted to allow blocking with respect to the trolley 120.

The guiding means 130 comprise at least one pair of calibrated rods adapted to slide the trolley 120. The transmission means 140 comprise a toothed belt adapted to connect a pinion free of rotating with respect to the trolley 120, with a pinion integral with the shaft of the controlled motor 150.

The delivering device 100 of a liquid substance for preparing beverages of the present invention allows obtaining its pre-set objects.

In fact, the delivering device 100 of a liquid substance for preparing beverages allows delivering a liquid substance, normally water, in a battery of containers, normally suitable mixers, and simultaneously sucking possible vapours.

The delivering device 100 of a liquid substance for preparing beverages comprises a delivering device of the fluid adapted to linearly move or through another type of movement to be able to reach the delivering points of a mixer, through a trolley sliding.

Moreover, the delivering device 100 of a liquid substance for preparing beverages comprises a water inlet device connected to a nozzle and a tube for sucking the vapour adapted to linearly move or through another type of movement to be able to reach the delivering point of the mixer.

A kinematism allows the delivering device of the fluid, the water inlet delivering device and the tube for sucking vapour to reach the delivering points remaining on board the sliding trolley.

The vapour sucking circuit is an extracting device of vapours of the liquid substance connected through a flexible tube from the fan to the vapour taking device integral with the fluid delivering system.

The hydraulic circuit can be simplified with an exchanger/boiler of heat connected through a flexible tube to the delivering point without using solenoid shunting valves downstream of the exchanger/boiler outlet.

## Claims

1. Delivering device (100) of a liquid substance for preparing beverages, comprising at least one nozzle (101) adapted to be placed, in a sequence, next to at least one container of a battery (200) of containers to allow outwards pouring a dose of the liquid substance, in a pre-established amount, and further comprising at least one extracting device (110) of vapours of the liquid substance released in a space between said battery (200) of containers and said nozzle (101), said extracting device (110) comprising capturing means (111) and collecting means (112) of vapours of the liquid substance, **characterized in that** it further comprises at least one trolley (120) sliding along guiding means (130) and dragged with transmission means (140) by at least one controlled motor (150), said trolley (120) being adapted to transport said at least one nozzle (101) and said extracting device (110) of vapours of the liquid substance,
**in that** said nozzle (101) is connected through at least one hydraulic flexible tube to thermal-hydraulic means (102) comprising at least one boiler for heating the liquid substance to be sent to said nozzle (101), said thermal-hydraulic means (102) being fixed with respect to said trolley (120) and lacking solenoid valves or timed or intercepting elements of the liquid substance,
and **in that** said extracting device (110) is connected through at least one hydraulic flexible tube to sucking means (103) comprising at least one fan, said sucking means (103) being fixed with respect to said trolley (120) and lacking solenoid valves or timed or intercepting elements of the liquid substance.

2. Delivering device (100) according to the previous claim, **characterized in that** said extracting device (110) is separable from said trolley (120) to allow cleaning said collecting means (112).

3. Delivering device (100) according to claim 1, **characterized in that** said capturing means (111) comprise at least one hood open at its base to allow flowing the vapours of the liquid substance towards said collecting means (112) and said collecting means (112) comprise at least one tank, said capturing means (111) and said collecting means (112) being separated by at least one wall (113) open on its top and equipped with closing means (114) adapted to allow blocking with respect to said trolley (120).

4. Delivering device (100) according to any one of claims 1 to 3, **characterized in that** said guiding means (130) comprise at least one pair of calibrated rods adapted to slide said trolley (120), said transmission means (140) comprising a toothed belt adapted to connect a pinion free of rotating with respect to said trolley (120) with a pinion integral with the shaft of said controlled motor (150).

## Patentansprüche

1. Ausgabevorrichtung (100) einer flüssigen Substanz für die Zubereitung von Getränken, die mindestens eine Düse (101) enthält, die dazu dient, sich nacheinander an mindestens einem Behälter einer Behälterbatterie (200) zu positionieren, um es zu ermöglichen, eine Dosis der flüssigen Substanz in einer vorbestimmten Menge nach außen abzugeben, und die außerdem mindestens eine Extraktionsvorrichtung (110) der Dämpfe der flüssigen Substanz enthält, die zwischen der genannten Behälterbatterie (200) und der genannten Düse (101) freigesetzt wurden, die genannte Extraktionsvorrichtung (110) enthält Fangvorrichtungen (111) und Speichervorrichtungen (112) der Dämpfe der flüssigen Substanz, und ist **dadurch gekennzeichnet, dass** sie außerdem mindestens einen Wagen (120) enthält, der längs der Führungsvorrichtungen (130) gleitet und mit Übertragungsvorrichtungen (140) von mindestens einem gesteuerten Motor (150) gezogen wird, der genannte Wagen (120) dient dazu, die genannte mindestens eine Düse (101) und die genannte Extraktionsvorrichtung (110) der Dämpfe der flüssigen Substanz zu transportieren,
und dadurch, dass die genannte Düse (101) durch mindestens einen Hydraulikschlauch mit thermohydraulischen Vorrichtungen (102) verbunden ist, die mindestens einen Heizkessel/Wasserkocher enthalten, um die flüssige Substanz zu erhitzen, die an die genannte Düse (101) geleitet wird, die genannten thermohydraulischen Vorrichtungen (102) sind gegenüber dem genannten Wagen (120) fest und haben keine Magnetventile oder zeitgeschaltete Elemente oder Sperrelemente der flüssigen Substanz,
und dadurch, dass die genannte Extraktionsvorrichtung (110) durch mindestens einen Hydraulikschlauch mit Saugvorrichtungen (103) verbunden ist, die mindestens ein Gebläse enthalten, die genannten Saugvorrichtungen (102) sind gegenüber dem genannten Wagen (120) fest und haben keine Magnetventile oder zeitgeschaltete Elemente oder Sperrelemente der flüssigen Substanz.

2. Ausgabevorrichtung (100) gemäß dem vorhergehenden Patentanspruch, die **dadurch gekennzeichnet ist, dass** die genannte Extraktionsvorrichtung (110) trennbar vom genannten Wagen (120) ist, um die Reinigung der genannten Speichervorrichtungen (112) zu ermöglichen.

3. Ausgabevorrichtung (100) gemäß Patentanspruch 1, die **dadurch gekennzeichnet ist, dass** die genannten Fangvorrichtungen (111) mindestens einen offenen Dampfabzug an der Basis enthalten, um zu ermöglichen, dass die Dämpfe der flüssigen Substanz in Richtung der genannten Speichervorrichtungen (112) fließen, und die genannten Speichervorrichtungen (112) enthalten mindestens eine Wanne, die genannten Fangvorrichtungen (111) und die genannten Speichervorrichtungen (112) sind durch mindestens eine Wand (113) getrennt, die oben offen ist, und sind mit Verschlussvorrichtungen (114) ausgestattet, die die Blockierung gegenüber dem Wagen (120) ermöglichen.

4. Ausgabevorrichtung (100) gemäß einem beliebigen der Patentansprüche von 1 bis 3, die **dadurch gekennzeichnet ist, dass** die genannten Führungsvorrichtungen (130) mindestens ein Paar kalibrierte Stangen enthalten, die dazu dienen, den genannten Wagen (120) gleiten zu lassen, die genannten Übertragungsvorrichtungen (140) enthalten einen Zahnriemen, der dazu dient, einen Ritzel, der sich frei gegenüber dem genannten Wagen (120) dreht, mit einem Ritzel zu verbinden, der einteilig mit der Welle des genannten gesteuerten Motors (150) ist.

## Revendications

1. Dispositif de distribution (100) d'une substance liquide pour préparer des boissons, comprenant au moins une buse (101) apte à se positionner, dans l'ordre, au niveau au moins d'un boîtier d'un groupe (200) de conteneurs pour pouvoir verser à l'extérieur une dose de la substance liquide, selon la quantité préétablie et comprenant en outre un dispositif d'extraction (110) des vapeurs de la substance liquide libérées dans l'espace entre le groupe (200) de conteneurs et la buse (101) ; le dispositif d'extraction (110) comprend des moyens de capture (111) et des moyens de collecte (112) des vapeurs de la substance liquide ; **caractérisé en ce qu'**il comprend, en outre, au moins un chariot (120) coulissant le long de moyens de guidage (130) et entraîné à travers des moyens de transmission (140) par au moins un moteur (150) contrôlé ; le chariot (120) est apte à transporter au moins une buse (101) et le dispositif d'extraction (110) des vapeurs de la substance liquide,
**en ce que** la buse (101) est reliée à travers un tuyau flexible hydraulique à des moyens thermo-hydrauliques (102) comprenant au moins une chaudière/bouilloire pour chauffer la substance liquide à envoyer à la buse (101) ; les moyens thermo-hydrauliques (102) sont fixes par rapport au chariot (120) et ils ne sont pas dotés d'électrovannes ou d'éléments temporisés ou d'interception de la substance liquide,
**en ce que** le dispositif d'extraction (110) est relié à travers un tuyau flexible hydraulique à des moyens d'aspiration (103) comprenant au moins un ventilateur ; les moyens d'aspiration (103) sont fixes par rapport au chariot (120) et ils ne sont pas dotés d'électrovannes ou d'éléments temporisés ou d'interception de la substance liquide.

2. Dispositif de distribution (100), selon la revendication précédente, **caractérisé en ce que** le dispositif d'extraction (110) peut être séparé du chariot (120) pour permettre le nettoyage des moyens de collecte (112).

3. Dispositif de distribution (100), selon la revendication 1, **caractérisé en ce que** les moyens de capture (111) comprennent au moins un hotte ouverte à la base pour permettre la circulation des vapeurs de la substance liquide vers les moyens de collecte (112) qui comprennent au moins un bac ; les moyens de capture (111) et les moyens de collecte (112) sont séparés au moins par une cloison (113) ouverte dans la partie supérieure et sont dotés de moyens de fermeture (114) aptes à permettre le blocage par rapport au chariot (120).

4. Dispositif de distribution (100), selon l'une des revendications de 1 à 3, **caractérisé en ce que** les moyens de guidage (130) comprennent au moins un couple de tiges calibrées aptes à faire coulisser le chariot (120) ; les moyens de transmission (140) comprennent une courroie dentée apte à relier un pignon (120) (qui tourne librement par rapport au chariot) à un pignon solidaire de l'arbre du moteur (150) contrôlé.
